# EUROPEAN PATENT APPLICATION

(11) **EP 2 487 556 A1**
(43) Date of publication of application: **15.08.2012**
(21) Application number: 10822299.3
(22) Date of filing: 07.09.2010
(51) Int. Cl.: G06F 3/00

(54) **SENSOR PANEL, DISPLAY AND JOYSTICK ARRANGEMENT IN AN ELECTRONIC DEVICE**

(30) Priority: 05.10.2009 RU 2009136784
(71) Applicant: Miroshnichenko, Vladimir Vitalievich, Moskovskaya obl. 140003 (RU); Pilkin, Vitaly Evgenievich, Moscow 127081 (RU)
(72) Inventor: MIROSHNICHENKO, Vladimir Vitalievich, Moskovskaya obl. 140003 (RU)
(74) Representative: Klemm, Rolf
(86) International application number: PCT/RU2010/000486
(87) International publication number: WO 2011/043691

(57) **Abstract**

The present group of inventions pertains to the field of electronic engineering. An electronic device includes a sensor panel and/or a display and/or a joystick. The sensor panel and/or display and/or joystick may be arranged on the front and/or back sides or on the lateral sides of the body of the electronic device and can be moved around the body of the electronic device. The sensor panel and/or display and/or joystick can also be arranged on at least three sides of the body of the electronic device. The sensor panel and/or display and/or joystick have a protective cover, or take the place of a protective cover, or are arranged on the protective cover of a photo camera and/or video camera lens.

## Description

### FIELD OF THE INVENTION

The group of two inventions relates to electronic devices and is designed for arrangement of a touchpad and/or a visual display and/or a joystick in electronic devices.

### BACKGROUND OF THE INVENTION

In regard to the first claimed invention: touchpads, touch screen displays and joysticks are widely used for controlling functions of electronic devices.

A touchpad is known to be used in an electronic device and is designed to control the electronic device functions. For more details see http://ru.wikipedia.org/wiki/Touchpad. A touch screen display is known to control the electronic device functions by means of a finger or a stylus or some other object moving upon the screen surface. For more details see http://ru.wikipedia.org/wiki/Sensor screen.

A joystick is also known to be used in controlling the electronic device functions. For more details see http://en.wikipedia.org/wiki/Joystick.

The nearest embodiment to the invention described herein is the method of arrangement of a touchpad inside the body of an electronic device (e.g. a mobile phone). For more details see http://www.mobiledevice.ru/nibiru-andy-kurovets-nokia-Mobile-Phone-Concept-slaider-Camerat. aspx

The disadvantage of the above mentioned method is that the touchpad is arranged on the lateral side of the body of the electronic device, which prevents the user from performing manipulations on this touchpad by the hand, which holds the device.

In regards to the second claimed invention: it's known an electronic device wherein on each of the opposite sides of the body of said electronic device is placed one visual display. For more details see http://allnokia.ru/news/11963/. No prior arts equivalent to the embodiment of the second invention described herein have been discovered.

### OBJECTIVES AND DESCRIPTION OF THE INVENTION

The first invention described herein is aimed at a user-friendly arrangement of a touchpad or a joystick in an electronic device, wherein: 1) at least one touchpad or at least one part (sector) of a touchpad or at least one joystick or a part of it is arranged on the rear side of the electronic device body to function in said arrangement, or 2) a touchpad or a part (sector) of a touchpad or a joystick is arranged partially on the rear side of the electronic device body, or 3) a touchpad or a part (sector) of a touchpad is arranged at once on the lateral side and the rear side of the electronic device body, and a touchpad itself has at least one bending, or 4) a touchpad or a part (sector) of a touchpad is arranged at once on the front side, lateral side and rear side of the electronic device body, or 5) a joystick is arranged on the lateral side of the electronic device body, or 6) a touchpad or a part (sector) of a touchpad or a joystick are made so as to move along the electronic device body, or 7) at least one sector is created on a touchpad or on one part of a touchpad or on a touch screen display, and/or a) a touchpad or a part (sector) of a touchpad has partially or completely convex shape and/or b) a touchpad or a part of it (sector) or a joystick is protected with a cover and/or c) a touchpad or a part (sector) of it or a joystick replaces the protective cover of a camera lens and/or camcorder lens or is placed on the protective cover of a camera lens and/or on the protective cover of a camcorder lens.

The second invention described herein is aimed at arrangement of a partially or a completely touch screen display on at least three sides of the electronic device body, i.e. on two opposite sides and at least on one lateral side.

For proper understanding and interpretation of the text and claims described herein the following terms are used:

*Virtual Symbol Control (VSC)* is a touchpad or a touch screen display or a joystick which allows controlling the functions of an electronic device through controlling virtual symbols, e.g., a cursor;

*Touchpad (Eng. touchpad, trackpad)* is a sensor pad of an electronic device, wherein a controlling the functions of an electronic device is performed through controlling virtual symbols, e.g., a cursor;

*Touch screen display* is a display screen (monitor) of an electronic device, where controlling the functions of an electronic device is performed through a contact moving a finger and/or a stylus on a touch screen display surface;

*Joystick* is a device for controlling a virtual symbol, which represents a strain-gauge joystick and is equivalent to a mouse for the notebooks. Among other joystick types are a trackball, a pointing stick, a trackpoint, a pointstick, a track stick, a stickpoint and other versions.

*Electronic device* is a mobile phone, a smart-phone, a communicator, a multimedia device, a netbook, a notebook, a computer tablet, an electronic book, a digital camera, a camcorder and other electronic devices equipped with a touchpad and/or a joystick and/or a completely or partially touch screen display.

The above mentioned technical result is achieved as follows:
1. At least one touchpad or at least one part (sector) of a touchpad or at least one joystick or a part of it is placed on the rear side of an electronic device body to function in the said arrangement, and the user of the electronic device through manipulations with the touchpad or a part (sector) of the touchpad or with the joystick or a part of the joystick controls at least one virtual symbol displayed at least on one visual display, placed on the front side of the electronic device body, or a touchpad or a part (sector) of a touchpad or a joystick is partially placed on the rear side of an electronic device body or a touchpad or a part (sector) of a touchpad is arranged at once on both, i.e. on the lateral side and on the rear side of an electronic device body, herewith the touchpad itself has at least one bending, or a touchpad or a part (sector) of a touchpad is arranged at once on the front side, lateral side and on the rear side of an electronic device body, or a joystick is placed on the lateral side of an electronic device body, or a touchpad or a part (sector) of a touchpad or a joystick are made so as to move along the electronic device body, or at least one sector is created on a touchpad or on one part of a touchpad or on a touch screen display, herewith through said sector at least one virtual symbol displayed at least of one visual display screen placed on the front side of the electronic device body is controlled, and/or a touchpad or a part (sector) of a touchpad has partially or completely convex shape and/or a touchpad or a part (sector) of a touchpad or a joystick is protected with a cover and/or a touchpad or a part (sector) of a touchpad or a joystick replaces the protective cover of a camera lens and/or a camcorder lens or is placed on the protective cover of a camera lens and/or on the protective cover of a camcorder lens.
2. A touchpad or a part (sector) of a touchpad or a joystick may be attached to or built partially or completely into the rear side of an electronic device body in such a way that they might be available for the user.
3. A touchpad or a part (sector) of a touchpad or a joystick may be arranged over the rear side of an electronic device body partially or completely, herewith a touchpad or a part of a touchpad or a joystick is connected to the electronic device body by means of the known technical art.
4. A touchpad or a part (sector) of a touchpad or a joystick and an electronic device may functionally interact each other via a wired connection and/or via a radio or another wireless communication.
5. A notebook or a netbook may have a touchpad or a part (sector) of a touchpad or a joystick arranged on the downside of a notebook or a netbook body.
6. A surface area of any sector on a touchpad or on part of a touchpad or on a touch screen display may be less than a surface area of a touchpad or a touch screen display itself, and the quantity and a size of a touchpad sectors or a touch screen sectors, their arrangement, configuration and operation algorithm can be changed via known technical art.
7. The visual display surface area on the front side of an electronic device body may be equal or larger than that of a touchpad or a touch screen arranged on the rear side of the electronic device body.
8. The sector and/or a touch screen display wherein a sector has been created may have an option of partial or full lighting switch off or changing the lighting into another energy saving mode.
9. To protect a touchpad or a part (sector) of a touchpad from environmental exposure an additional visual display may be provided in the electronic device herewith to access a touchpad said additional visual display is moved aside.
10. An electronic device has a screen display arranged at least on three sides of an electronic device body, i.e. on two opposite sides and at least on one lateral side of the electronic device body, herewith the visual display is partially or completely touch screen display, herewith at least one virtual symbol, displayed on the said visual display, is controlled through manipulations on the touch screen display part.
11. At least one controlled virtual symbol may be displayed on that part of the visual display, which is located on the opposite side (sides) of the electronic device relative to the side, where the manipulations are performed.
12. A part of a visual display arranged on the lateral side of an electronic device body may be fully or partially protected by a protective cover or protective covers.
13. A protective cover or a part of a protective cover may be transparent or semi-transparent.
14. A part of a visual display arranged on the lateral side of an electronic device body may have a lager thickness and/or may have on its surface convex shapes and/or may be made of harder materials, herewith a part of a visual display arranged on the lateral side of the electronic device body either is not functioning as a touch screen, or to start its functioning as a touch screen display the user, first, has to perform some manipulations supported by the software of the electronic device.

### EMBODIMENT OF THE INVENTION

The first and second inventions described herein are feasible as can be realized due to application of prior technical art solutions and technology.

### APPLICATIONS OF THE INVENTION

The group of two inventions may be applied for a user-friendly arrangement of a touchpad and/or a touch screen display and/or a joystick in electronic devices.

## Claims

1. Arrangement of a touchpad, a visual display and a joystick in an electronic device, herewith said arrangement comprises a touchpad or a touch screen display or a joystick, **characterized in that**: 1) at least one touchpad or at least one part (sector) of a touchpad or at least one joystick or a part of it is arranged on the rear side of the electronic device body to function in said arrangement, and the user of the electronic device through manipulations with the touchpad or a part (sector) of the touchpad or with the joystick or a part of the joystick controls at least one virtual symbol displayed at least on one visual display placed on the front side of the electronic device body, or 2) a touchpad or a part (sector) of a touchpad or a joystick is arranged partially on the rear side of the electronic device body, or 3) a touchpad or a part (sector) of a touchpad is arranged at once on the lateral side and on the rear side of the electronic device body, and a touchpad itself has at least one bending, or 4) a touchpad or a part (sector) of a touchpad is located at once on the front side, lateral side and on the rear side of the electronic device body, or 5) a joystick is located on the lateral side surface of the electronic device body, or 6) a touchpad or a part (sector) of a touchpad or a joystick are made so as to move along the electronic device body, or 7) at least one sector is created on a touchpad or on part of a touchpad or on a touch screen display, herewith through said sector at least one virtual symbol displayed at least on one visual display placed on the front side of the device is controlled, and/or a) a touchpad or a part (sector) of a touchpad has partially or completely convex shape and/or b) a touchpad or a part of it (sector) or a joystick is protected with a cover and/or c) a touchpad or a part (sector) of it or a joystick replaces the protective cover of a camera lens and/or camcorder lens or is placed on the protective cover of a camera lens and/or on the protective cover of a camcorder lens.

2. Arrangement of a touchpad, a touch screen display and a joystick in an electronic device according to claim 1, wherein a touchpad or a part (sector) of a touchpad or a joystick is attached to or built partially or completely into the rear side of an electronic device body in such a way that they might be available for the user.

3. Arrangement of a touchpad, a touch screen display and a joystick in an electronic device according to claim 1 or 2, wherein a touchpad or a part (sector) of a touchpad or a joystick is arranged over the rear side of an electronic device partially or completely, herewith a touchpad or a part of a touchpad or a joystick is connected to the electronic device body by means of the known technical art.

4. Arrangement of a touchpad, a touch screen display and a joystick in an electronic device according to claim 1, wherein a touchpad or a part (sector) of a touchpad or a joystick and an electronic device are functionally interact each other via a wired connection and/or via a radio or another wireless communication.

5. Arrangement of a touchpad, a touch screen display and a joystick in an electronic device according to claim 1, wherein a notebook or a netbook has a touchpad or a part (sector) of a touchpad or a joystick arranged on the downside of a notebook or a netbook body.

6. Arrangement of a touchpad, a touch screen display and a joystick in an electronic device according to claim 1, wherein a surface area of any sector on a touchpad or on part of a touchpad or on a touch screen display is less than a surface area of a touchpad or a touch screen display itself, and the quantity and a size of a touchpad sectors or a touch screen sectors, their arrangement, configuration and operation algorithm are changed via known technical art.

7. Arrangement of a touchpad, a touch screen display and a joystick in an electronic device according to claim 1, wherein the visual display surface area on the front side of an electronic device body is equal or larger than that of a touchpad or a touch screen display arranged on the rear side of the electronic device body.

8. Arrangement of a touchpad, a touch screen display and a joystick in an electronic device according to claim 1 or 6, wherein the sector and/or a touch screen display wherein a sector has been created has an option of partial or full lighting switch off or changing the lighting into another energy saving mode.

9. Arrangement of a touchpad, a touch screen display and a joystick in an electronic device according to claim 1, wherein to protect a touchpad or a part (sector) of a touchpad from environmental exposure an additional visual display is provided in the electronic device herewith to access a touchpad said additional visual display is moved aside.

10. Arrangement of a touchpad, a visual display and a joystick in an electronic device, herewith said arrangement comprises a touchpad or a touch screen display or a joystick, **characterized in that** an electronic device has a visual display arranged at least on three sides of an electronic device body, i.e. on two opposite sides and at least on one lateral side of the electronic device body, herewith the visual display is partially or completely touch screen display, herewith at least one virtual symbol, displayed on the said visual display, is controlled through manipulations on the touch screen display part.

11. Arrangement of a touchpad, a touch screen display and a joystick in an electronic device according to claim 11, wherein at least one controlled virtual symbol is displayed on that part of the visual display, which is located on the opposite side (sides) of the electronic device relative to the side, where the manipulations are performed.

12. Arrangement of a touchpad, a touch screen display and a joystick in an electronic device according to claim 11, wherein a part of a visual display arranged on the lateral side of an electronic device body is fully or partially protected by a protective cover or protective covers.

13. Arrangement of a touchpad, a touch screen display and a joystick in an electronic device according to claim 12, wherein a protective cover or a part of a protective cover is transparent or semi-transparent.

14. Arrangement of a touchpad, a touch screen display and a joystick in an electronic device according to claim 11 or 12, wherein a part of a visual display arranged on the lateral side of an electronic device body has a lager thickness and/or has on its surface convex shapes and/or is made of harder materials, herewith a part of a visual display arranged on the lateral side of the electronic device body either is not functioning as a touch screen display, or to start its functioning as a touch screen display the user, first, has to perform some manipulations supported by the software of the electronic device.
